# EUROPEAN PATENT APPLICATION

(11) **EP 4 672 386 A1**
(43) Date of publication of application: **31.12.2025**
(21) Application number: 24184542.9
(22) Date of filing: 26.06.2024
(51) Int. Cl.: H01M 8/0258, H01M 8/0263, H01M 8/0267, H01M 8/0297, H01M 8/026, H01M 8/0206, H01M 8/10

(54) **NOVEL FUEL CELL BIPOLAR PLATES ASSEMBLY WITH INTERNAL CAPILLARY ASSISTED CLOSED LOOP COOLING**

(71) Applicant: Foundation of Research and Technology Hellas/ Institute of Chemical Engineering Sciences (FORTH/ICE-HT), 26504 Patras (GR)
(72) Inventor: Neophytides, Stylianos, 26504 Patra (GR); Daletou, Maria, 26504 Patra (GR); Neofytidis, Charalambos, 26504 Patra (GR); Paloukis, Fotios, 26504 Patra (GR); Athanasopoulos, Nikolaos, 26504 Patra (GR); Giotakos, Panagiotis, 26504 Patra (GR)
(74) Representative: Kosti, Vasiliki

(57) **Abstract**

The present disclosure relates to bipolar separator plates for a fuel cell, suitably a High Temperature Polymer Electrolyte Membrane Fuel Cell (HT-PEMFC), and a fuel cell stack comprising such bipolar plates. More particularly, the bipolar plates of the invention function as an internal capillary assisted closed loop cooling system, thus providing improved stable performance and operational efficiency and compact design to a fuel cell system.

## Description

### FIELD OF THE INVENTION

The present invention relates to bipolar separator plates for a fuel cell and a fuel cell stack comprising such bipolar plates. More particularly, the bipolar plates of the invention function as an internal capillary assisted closed loop cooling system, thus providing improved stable performance and operational efficiency and compact design to a fuel cell system.

### BACKGROUND

Hydrogen-based fuels play an important role in the decarbonisation of sectors where emissions are hard to abate and alternative solutions are either unavailable or difficult to implement, such as heavy industry and long-distance transport. Fuel cells have attracted broad attention as a clean electrical energy source since hydrogen or methanol, for instance, is electrochemically oxidized in each cell to directly convert and extract chemical energy of a fuel into electrical energy.

Typically, a fuel cell comprises two electrodes, an anode and a cathode, separated by an electrolyte membrane that allows ions (e.g. hydrogen ions), but not free electrons, to pass through from one electrode to the other. A catalyst on the electrodes accelerates a reaction with the fuel on the anode to separate electrons and protons/cations, and oxidant on the cathode to undergo a reduction reaction to water. A circuit can then be formed between the anode and the cathode that generates a current to power e.g. an electrical device. A reactant fluid, e.g. oxygen or reactant air, is supplied to the cathode and a fuel, e.g. hydrogen, is supplied to the anode.

A single pair of electrodes separated by an electrolyte membrane is called a membrane electrode assembly (MEA). A fuel cell MEA operating under a moderate load produces an output voltage of about 0.7V, which is often too low for many practical considerations. In order to increase this voltage, MEAs are typically assembled into a stack. The number of these MEAs in a stack in a fuel cell determines the total voltage, and the surface area of each membrane electrode determines the total current. Catalyst layers adjacent to the electrodes increase the rate of and efficiency of the reactions at the electrodes.

The fuel cell also includes gas diffusion layers (GDLs) disposed to be in close contact with two opposite surfaces of the membrane electrode assembly and configured to distribute reactant gases and transfer the generated electrical energy, and separators or bipolar plates disposed to be in close contact with the gas diffusion layers and configured to define flow paths. These separators may include an anode separator configured to supply hydrogen which is a fuel, and a cathode separator configured to supply air which is an oxidant. The separator includes channels through which the fuel or the oxidant flows. These plates, which may be made of metal, carbon, or composites, provide electrical conduction between cells, as well as providing physical strength to the stack. The surfaces of the plates typically contain a "flow field," which is a set of channels machined or stamped into the plate to allow gases to flow over the MEA. Additional channels inside each plate may be used to circulate a liquid coolant. Additionally, gaskets must be added around the edges of the MEA to make a gas-tight seal. These gaskets are usually made of a rubbery polymer.

There are a number of factors that determine the performance of a fuel cell. Maintaining the correct water content in the electrolyte membrane is essential to optimising a fuel cell's performance. The membrane requires a certain level of moisture to operate and conduct the ionic current efficiently so that the fuel cell current does not drop. Water produced by the cell is removed by the flow of fluid along the cathode or wicked away.

Overheating of the fuel cell stack can also cause problems and cooling is often required. This is generally achieved by supplying a coolant fluid (e.g. air or water) that circulates within the stack. In addition, a reactant fluid (e.g. oxygen or reactant air) is required by the cathodes to maintain a reaction. In the prior art set ups (see e.g. WO 2012/117035), the coolant and reactant fluids are supplied to the cathode in the same channel or flow.

The bipolar plate is one of the essential components in a PEM fuel cell and it performs many essential functions in a PEM fuel cell stack operation like supplying reactants to the MEAs, providing structural support to the MEA and efficient and thermal management.

Therefore, there is a need for designing bipolar plates for fuel cells with improved operational properties allowing for a compact and reliable system design, improved and stable performance and efficiency and cost-effective functioning of fuel cells.

### SUMMARY

The present invention relates to a novel bipolar separator plates assembly for a fuel cell, suitably a High Temperature Polymer Electrolyte Membrane Fuel Cell (HT-PEMFC), and a fuel cell stack comprising such bipolar plates. More particularly, the bipolar plates of the invention with their innovative design of built- in cooling microchannels function as an internal capillary assisted closed loop cooling system, thus providing improved performance and operational efficiency to a fuel cell.

Based on the disclosure provided herein, those skilled in the art will recognize, or be able to ascertain using no more than routine experimentation, many equivalents to the specific embodiments of the invention described herein. Such equivalents are intended to be encompassed by the following numbered embodiments (E).

E1. A bipolar plate assembly comprising
- a first bipolar plate (A) having flow fields (3) and (4) carved on each side of said plate
- a second bipolar plate (B) having flow fields (3) and (4) carved on each side of said plate so that a flow path is configured in both sides of each of said first and said second plate,

wherein said flow fields have a serpentine configuration on one side (A1, B1) of each said plate and an interdigitate configuration on the other side (A2, B2) of each said plate,
characterized in that the channels (5) of one side are carved over or under the ribs (7) of the other side,
in that said plates are stacked one on top of the other so that said channels (5) on one side of each plate are stacked to face the ribs (7) of the other plate,
in that each said plate has an entry and/or outlet channel (1) which consists of channels 1c, 1b and 1e at a gas manifold (1a),
in that said entry and/or outlet gas channel (1) of said first plate has a different position on said manifold (1a) with regard to the position of said entry and/or outlet gas channel (1) of said second plate so that when said first plate and said second plate are placed alternately one on top of the other in order to form a stack of plates said channels of each plate do not overlap,
and in that a gasket (2) is placed between each said plate.

E2. The bipolar plate assembly of E1 wherein said bipolar plates are made of aluminum or aluminum alloys and the thickness of each plate is about 1 to 0.5 mm.

E3. The bipolar plate assembly of E1 or E2 wherein said bipolar plates comprise cooling channels (9) carved on said plates forming a wick (8) where a cooling liquid, preferably water, is accommodated, wherein said cooling liquid develops a meniscus profile (13), a dry out region (14) and capillary forces allowing for driving the flow of said cooling liquid and wherein above said wick a void space is formed where a gas steam created by the evaporation of said cooling liquid can be separated by said liquid.

E4. A fuel cell comprising a bipolar plate assembly of anyone of E1 to E3, preferably said fuel cell is a high temperature polymer electrolyte membrane fuel cell.

E5. Use of a bipolar plate assembly of any one of E1 to E3 for the construction of a fuel cell, preferably said fuel cell is a high temperature polymer electrolyte membrane fuel cell.

### BRIEF DESCRIPTION OF THE DRAWINGS

**Figure 1****(A-B):** View of the two sides of each bipolar plate type A and B. Fig. 1A shows the one side A1 and B1 of each plate type respectively. Fig. 2B shows the opposite side of A2 and B2 of each plate accordingly.

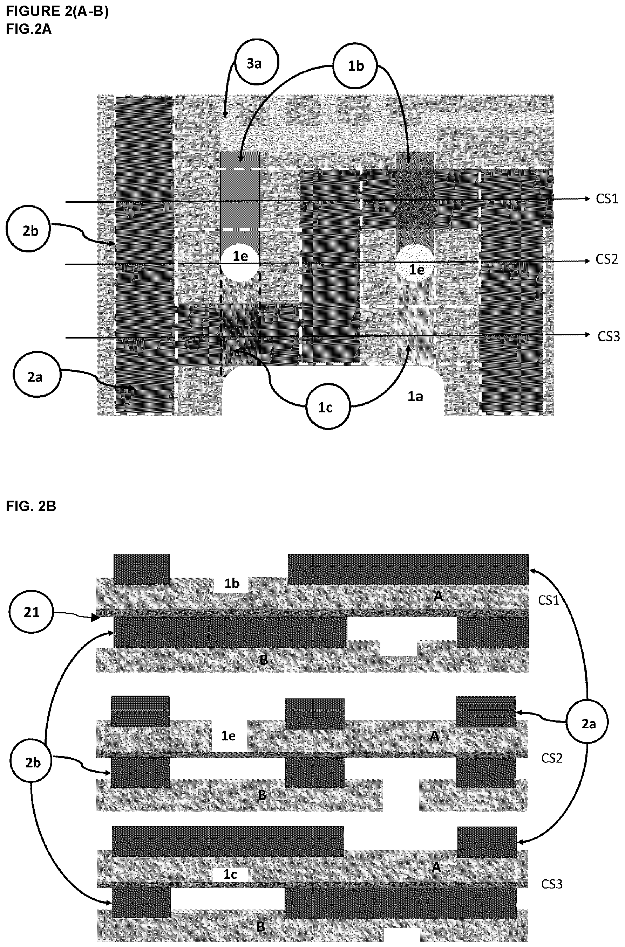

**Figure 2****(A-B):** Figure 2A shows a top view of the inlet/outlet region of two bipolar plates of type A and B placed one on top of the other and the three cross-sections CS1, CS2 and CS3. The inlet gas stream channels (1b), (1c), (1e) and the gasket (2) of the lower plate B are presented in white dash and solid lines. The inlet/outlet gases from/to the gas manifolds (1a) are driven to the flow fields through the inlet gas stream channels (1b), (1c), (1e). Figure 2B shows the cross-sections CS1, CS2 and CS3 and that the bipolar plates A and B are separated by the membrane electrode assembly (21).
**Figure 3****:** Cross-section of a bipolar plate showing the carved channels (5), the ribs (7) and the walls (6) formed between two channels or one channel and one rib.
**Figure 4****.** Detail of a bipolar plate showing a set of straight microchannels carved on the plate surface so that they can form a wick (8), where the cooling fluid is accommodated.
**Figure 5****.** Graph showing the pressure difference as a function of the number of channels on the bipolar plate. Square symbol curve represents the serpentine configuration of the channels and circle symbol curve the interdigitate configuration.
**Figure 6****.** Detailed section of a plate wick in a rectangular channel showing the area where the cooling fluid is accommodated (12), the meniscus profile (13), the dry-out region (14), the triple-phase contact line (15) between the solid channel (16), the side wall (17) and the dry-out point (18).
**Figure 7****.** Graph showing the capillary sustained flow rate through a microchannel as a function of the channels dimensions.
**Figure 8****.** Pumpless two-phase equilibrium water-steam cooling system process flow diagram.

### DETAILED DESCRIPTION

The present disclosure relates to bipolar separator plates for a fuel cell, suitably a High Temperature Polymer Electrolyte Membrane Fuel Cell (HT-PEMFC), and a fuel cell stack comprising such bipolar plates. More particularly, the bipolar plates of the invention function as an internal capillary assisted closed loop cooling system, thus providing improved performance and operational efficiency to a fuel cell.

Currently, polymer electrolyte fuel cells are broadly used as alternative power sources for automobiles, home co-generation systems, portable power generators etc.

High temperature polymer electrolyte membrane fuel cells (HT-PEMFC), operating in the 150-200 ⁰C temperature range, exhibit excellent tolerance to carbon monoxide (CO) from reformate hydrogen and allow for simplified water and thermal management. CO tolerance is understood to mean operation in the presence of CO with voltage loss at the hydrogen electrode of less than 10-20 mV (Yang et al; Journal of Power Sources; 103:1-9 (2001)). They are typically constructed around a proton conducting membrane based on poly- benzimidazole (PBI) imbibed with phosphoric acid. The proton transport between the electrodes is made possible by the phosphoric acid and the proton conductivity increases with increasing phosphoric acid content. (Jeong et et al; 2017: J Power Sources; 363:365-374; https://doi.org/10.1016/j.jpowsour.2017.07.109). The development of suitable materials for polymer electrolytes, electrocatalysts and electrodes of the MEAs is essential to achieve efficient operation of such devices. Beyond the MEA components, the fuel cell stack performance is affected by many other aspects, such as the design and proper assembly of the stack, the conditions of the operation and the degradation of the materials. In addition, there are many important parameters to be determined such as the weight and the cost of the system or the environmental conditions in which the application takes place.

HT-PEMFCs combine the advantages of Polymer Electrolyte Membrane (PEM) technology and high temperature operation. Compared to low temperature PEMFCs, when used as energy converters in portable, mobile and stationary power devices, HT-PEMFCs can offer significant flexibility with several advantages. Heavy and bulky subsystems for the humidification of the reactants and subsequently the electrolyte, as well as other water management issues are completely avoided. Moreover, the high production cost of very pure hydrogen fuel, a major obstacle for low temperature operation, can be eliminated due to the higher operating temperature that enables tolerance towards carbon monoxide. In addition, the cooling system can become more compact and simpler compared to low temperature PEMFCs, because of the higher temperature difference with the environment, leading to higher mass and volume specific power density at the system level. An important comparative advantage of this technology is the high-grade heat that is generated, which can be efficiently recovered and leverage the overall efficiency on the stack level well above 90%. During HT-PEMFCs operation it is essential that a cooling system is provided so that a temperature balance is maintained within the device. For example, an efficient cooling system based on closed water/steam loop has been demonstrated for the cooling of a HT-PEM fuel cell and production of superheated steam up to 9 bars when the fuel cell operated at 180 °C. The circulation of water and steam was realized through the gravimetric flow of liquid water after the condensation of the steam in the heat exchanger. The internal pumpless two-phase equilibrium water-steam cooling secures temperature gradientless and isothermal operation of the stack and the production of high temperature superheated steam, which is an effective carrier of high-quality thermal energy with several commercial and industrial applications (Neofytides et al; Energy Conversion and Management. 283 (2023); https://doi.org/10.1016/j.enconman.2023.116944).

Moreover, the bipolar plates framing an MEA constitute more than 60% of the weight of a fuel cell stack and therefore it is desired that a lightweight material is chosen for their production so that the fuel cell comprising them is easier to handle.

Bearing in mind the increasing interest of the relevant global markets for fuel cells with improved properties, the inventors of the current disclosure have designed and manufactured bipolar plates, with significantly reduced weight, made of Aluminum and/or aluminum alloys (e.g. 7075 aluminum alloy with zinc) and a thickness as low as 0.5 mm owed to a specific design of the gas channels. Such a design additionally allows for a closed loop configuration providing a cooling effect using capillary forces without the need of a recirculation pump or hydrostatic pressure difference. In this respect the capillary assisted water-steam recirculation can simplify and miniaturize the fuel cell system architecture, suitably a HT-PEM fuel cell stack, and can be utilized even under special conditions e.g. under a microgravity environment in several space related devices.

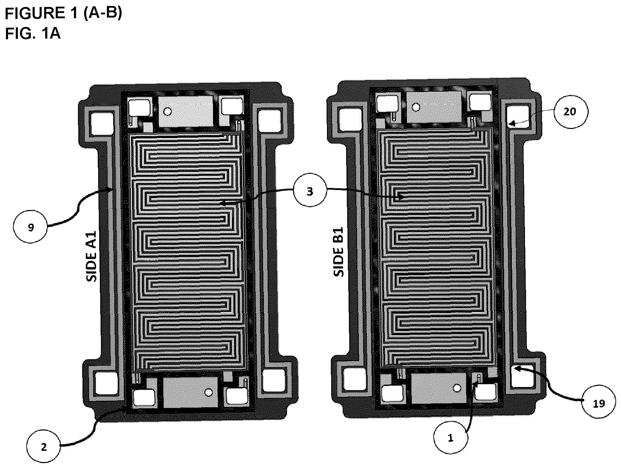

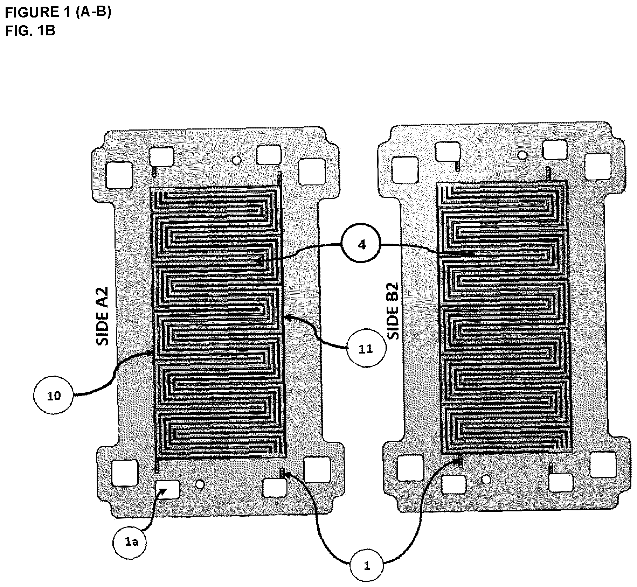

The specific design of two alternative configurations of bipolar plates, A and B respectively, of the invention are illustrated in Figure 1. In particular, Figure 1A shows one side, namely A1 and B1, of each of the two plate types A and B, and Figure 1B shows the other side, namely A2 and B2 respectively. Such two bipolar plate types are stacked alternately to form the fuel cell stack, and their basic difference is the design of the entry (inlet) and outlet channels (1) in order to achieve gas tightness and continuous surface adhesion of the sealing gaskets (2) and avoid H2 and/or O2 crossover at the position of the gas manifolds (1a).

Figure 2A shows a top view of the inlet/outlet region of two bipolar plates, type A and B, placed one on top of the other while Figure 2B shows the cross-section along the lines CS1, CS2 and CS3. The inlet/outlet gas stream channels (1b), 1(c), (1e) and the gasket (2b) of the lower plate B are presented in white dash and solid lines. The inlet/outlet gas streams from/to the gas manifolds (1a) are driven to/from the flow fields through channels (1b, 1c and 1e), as shown in Figure 2, which are carved half way on opposite sides on the way from the manifold 1a to the flow field A1 or B1. An open through-plane channel (1e) connects channels 1b and 1c. The inlet/outlet channels (1c) are positioned on the two plates A and B alternatively at the two sides, namely at a different position on each plate A and B, of the gas manifolds (1a). In this way the gaskets (2) are placed between the two bipolar plates in a way so as to avoid the overlapping with the inlet/outlet channels 1b and 1c and thus, is pressed on the flat areas of the plates in order to achieve an effective sealing. This is more clearly shown in Figure 2B where the cross-sections are presented along three lines (CS1, CS2, CS3) shown in Figure 2A at the inlet/outlet region of the two bipolar plates A and B placed one on top of the other. A gasket (2a) as shown in Figure 2A and Figure 2B is placed on-top of SIDE A1 of plate A and a gasket (2b) is placed on top of SIDE B1 of plate B facing SIDE A2 of plate A. As it is also shown in Figure 2B, the positioning of the inlet channels (1) at the two different places on the manifold secures that the gaskets are not trespassing over a carved channel thus, avoiding the negative consequences and severe malfunction of the stack due to cross-over leak between the anode and cathode compartments.

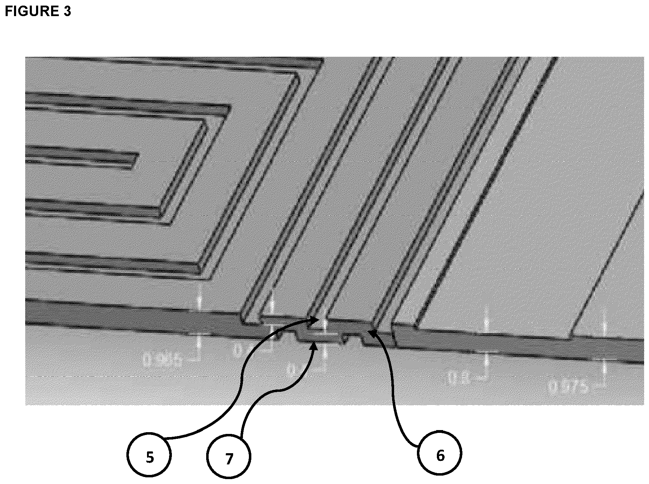

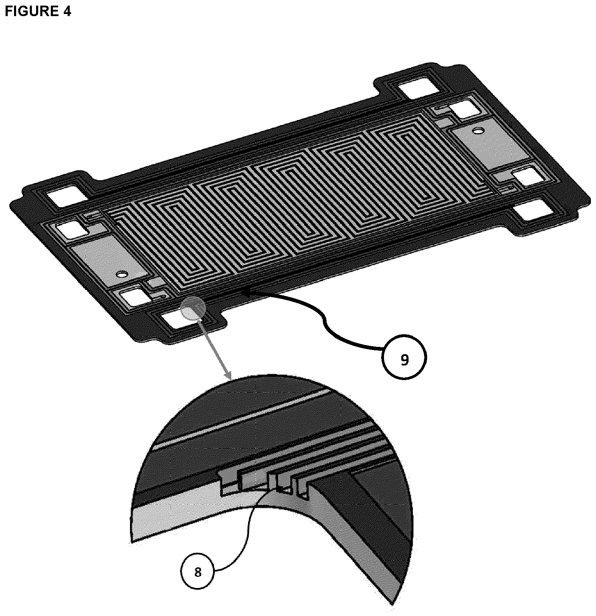

Additionally, as shown in Figure 1A, on side A1 and B1 of each plate A and B, the channels of the flow field (3) of the bipolar plates are carved in the serpentine configuration, while as shown in Figure 1B, sides A2 and B2, the gas channels (4) are carved in the interdigitate form. In order to achieve ultrathin bipolar plates, the channels (5) of the one side face the ribs (7) of the other side as this is explicitly shown in the cross section of Figure 3. The thickness of the walls (6) between the two channels and the thickness between the channel's bottom and the rib is between 100µm to 500µm depending on the dimensions and the properties (thermal and electrical conductivity) of the bipolar plate and the heat rate produced by the electrochemical reaction. Thicker wall thickness is needed when using materials with lower heat conductivity and at high heat rate production of the fuel cell. Specifically, in the case of AI plates the thickness of walls (6) can be even less than 300µm (channels width 500µm and depth 500µm). It is calculated that for the heat transfer of at least 0.35W/cm2 of produced heat a temperature gradient of 1.5°C/cm must be established along the bipolar plate to facilitate effectively the flow of thermal energy, produced by the electrochemical H₂ oxidation reaction on the membrane electrode assembly, toward the long sides of the bipolar plate, where the cooling and heat withdrawal takes place (at position 9 and 8, as shown in Figures 1 and 4 respectively).

In the case of the interdigitate flow field (sides A2 and B2 in Figure 2b) there are two types of channels: inlet 10 and outlet 11 channels. The flow from the inlet channels is pushed through the porous gas diffusion electrode over the ribs to reach the outlet channels. Therefore, the forced flow through the gas diffusion electrode facilitates the distribution of the gas throughout the electrode porosity and its fast access to the active electrocatalyst. The flow in the serpentine channels (sides A1 and B1) follows the continuous line of the channels to the outlet of the bipolar plate and the distribution of the gaseous reactants within the electrode onto the catalytic layer is realized through the diffusion of the gases through the porosity of the gas diffusion electrode.

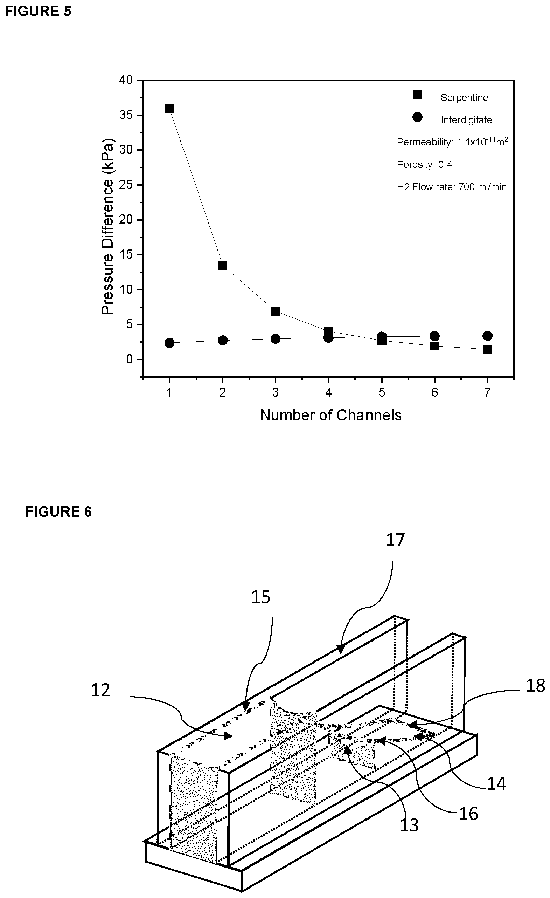

A detailed modeling has been contacted in order to calculate the pressure drop through the flow fields aiming to the design of the flow field channels pattern, in terms of their dimensions (length, width and depth and the dimensions of the ribs) as well as the number of channels that run in parallel, so that the pressure drop along both flow fields is the same and the pressure between the two sides of the MEA is equal. Based on the design shown in Figure 1A and 1B the pressure drop was estimated by varying the number of flow channels that run in parallel in the serpentine flow field and consequently defining the shape of the interdigitate flow field channels. These calculations were derived from a 3D steady-state, single-phase computational fluid dynamics (CFD) model, solving the Continuity and Momentum (Navier-Stokes) conservation equations using the Finite Element Method (FEM) (Xiong et al; Applied Energy. 301 (2021) 117443. https://doi.org/10.1016/j.apenergy.2021.117443.) It is evident from Figure 5 that for the specific dimensions of the bipolar plate and the properties of the gas diffusion layer which covers the flow field, the five flow channels running in parallel give the same pressure drop with the interdigitate field. When the number of parallel channels in the serpentine flow field is lower than 5 a higher-pressure drop is calculated than the corresponding pressure drop in the interdigitate field configuration. This is attributed to the longer flow channels needed to facilitate the gas flow along the bipolar plate. In the case of the interdigitate flow field a slight increase in the pressure drop is observed with increasing the number of channels that run in parallel. This is because the inlet and outlet channels (4) are less when the number of the serpentine parallel channels increases, while the gas flow must override more ribs through the gas diffusion layer to reach the outlet channels. The balance in the pressure drop between the two flow fields is needed so that the MEA does not face differential pressure between the O₂ and H₂ sides.

Moreover, the bipolar plates of the invention are designed so that they comprise built-in cooling channels (9) (Figure 1A and 4) for a far more efficient cooling. Such a design of the channels allows for a uniform distribution of the temperature along the bipolar plate and consequently along the MEA, and most importantly said channels have the ability to drag the cooling fluid along the cooling channels by the use of capillary forces without the need of a recirculating pump. Thus, as shown in Figure 4 a set of straight microchannels (8) are carved along the cooling region (9) on the bipolar plate so that they can form a wick (8), where the cooling fluid is accommodated (12) and develops a meniscus profile (13), a dry out region (14) and capillary forces to drive the flow of the liquid. The process of the capillary flow is schematically shown in Figure 6 which illustrates a schematic diagram of the shape of the liquid in a rectangular channel i.e. the triple-phase contact line (15) between the solid channel (16), the liquid (12) and the gas phase and the effect of the evaporation process on the shape of the continuous curve (16) of the interaction of the meniscus (13) and the side wall (17) along the axial direction of the micro-channel. A prerequisite for the continuous effect of the capillary forces to maintain the capillary flow is to preserve the shape of the meniscus reaching the dry-out point (18) by the complete depletion of the cooling liquid through evaporation.

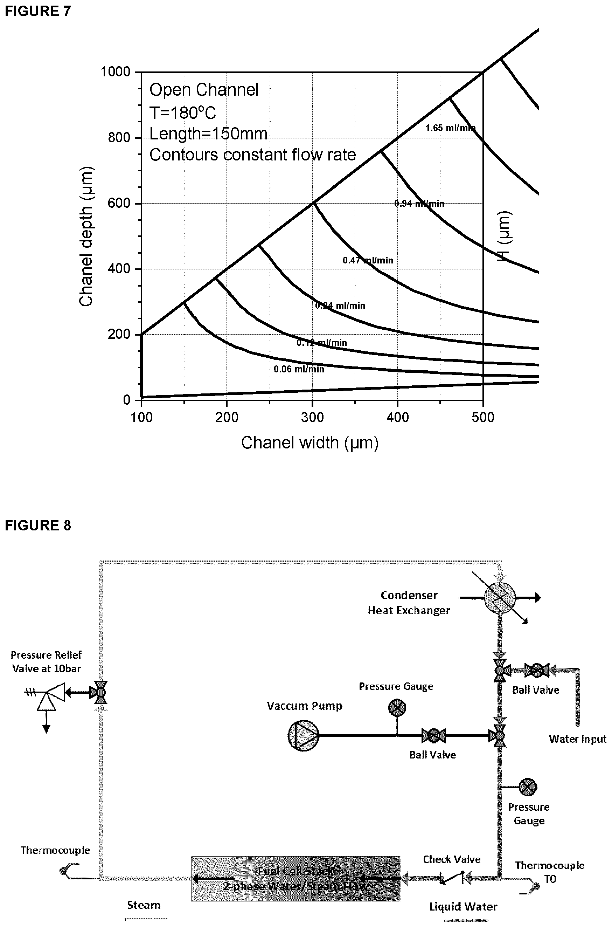

Beside the properties of the liquid (viscosity, heat of evaporation) the geometric factors that affect the flow of the liquid in the wick channels are the width of the channels, the depth of the channels the length and number of the microchannels forming the wick. The width of the channels can be in the range of 0.2-0.5mm, the depth in the range of 0.3-0.8mm and the length up to 200mm. Usually, a wick of the present disclosure comprises 1 to 10 cooling channels. As it is discussed further the exact dimensions depend on the cooling needs and specifically the rate of heat abstraction from the MEA and the bipolar plates of the fuel cell, the viscosity of the cooling fluid, the heat of evaporation and thus the cooling liquid flow-rate through the capillary channels. This is explicitly depicted in Figure 7 which shows the effect of the geometrical parameters in relation to the physical properties of the water cooling liquid on the water flow rate through an open gold plated rectangular micro-channel at 180°C. These computations were obtained through numerical solution of a modified 1D capillary flow governing equation, which accounts for both inertial and viscous contributions in the capillary, from the liquid and vapor phase respectively (Ouali et al; Microfluid Nanofluid. 15 (2013) 309-326. https://doi.orq/10.1007/s10404-013-1145-5; Hua et al; Micromachines (Basel). 13 (2022) 1098. https://doi.org/10.3390/mi13071098). Considering the dimensions of the bipolar plate of Figure 1A and that the four wick's microchannels dimensions are width=0.3mm, depth=0.5mm and length=150mm, the capillary sustained flow rate of water through each microchannel can be as high as 0.39 ml/min (see Figure 7). Thus, the expected maximum thermal energy that can be abstracted, by the evaporation of the water cooling fluid flowing through the cooling microchannels during the electrochemical oxidation of H₂ on the membrane electrode assembly, is 0,58W/cm² Note that the said high temperature polymer electrolyte membrane electrode assembly can produce no more than 0.4W/cm²thus, proving the operational sustainability of the proposed design.

Additionally, in order to ensure the structural and chemical stability of the Aluminum based bipolar plates of the invention which need to operate under the harsh acidic environment of a fuel cell, an appropriate surface coating is applied on said bipolar plates. Several coating materials resistant to phosphoric acid can be used such as Nickel/gold successive layers, graphene, Ni based Hastelloy G35 alloy, Tantalum and MXenes materials either carbides or nitrides. These materials exhibit extraordinary resistance to phosphoric acid corrosion and their use relates to the adhesion properties to the Aluminum surface and the cost of materials and coating procedure. Suitable procedures to achieve the surface coating of the bipolar plates are known in the state of the art and include electroless or electrochemical plating, vacuum sputtering, powder hot and cold sputtering, chemical vapor deposition or combination of the above.

The bipolar plates assembly of the invention, which comprises a stack of plates of type A and B, alternately arranged one on top of the other can form part of a fuel cell stack, suitably a HT-PEM stack. Said HT-PEM stack is constructed by stacking repeating bipolar plates and MEAs in series and can be connected to a pumpless two-phase equilibrium water-steam cooling system using solely water as the cooling fluid (Yan et al; Sci. China Technol. Sci. 64 (2021) 2762-2770. https://doi.orq/10.1007/s11431-021-1889-4, C. Neofytidis et al; 283 (2023) 116944. https://doi.org/10.1016/j.enconman.2023.116944).

Following the below described cooling methodology we can produce superheated steam at high pressure up to 15 bar depending on the operating temperature of the HT-PEM fuel cell stack. According to the thermodynamics of water steam equilibrium the maximum pressure of steam that can be achieved depends directly on the stack's operating temperature which is equal to the temperature of the cooling water medium. Thus if the stack operates at 160°C the equilibrium steam pressure is 6.1 bar and at 200°C the corresponding pressure is 15.5 bar. The process flow diagram of the developed cooling system is shown in Figure 8. The primary cooling medium, preferably water, is circulated in a closed pipe loop connecting the cooling channels of the bipolar plates of the HT PEM fuel cell stack with a heat exchanger. The tubing and heat exchanger are made of materials inert to their interaction with water, which may have as a consequence to produce H₂, like stainless steel 316 or other metals or alloys who form passive oxide layers. This interaction may result in detrimental consequences to the operational functionality of the closed loop. The loop is initially degassed with the aid of a vacuum pump and is then partially filled with an amount of about 70-150ml of liquid water depending on the volume of the closed loop tubing. The cooling effect is achieved solely via the evaporation of the water that is being introduced to the wick cooling micro-channels (8) and (9) onto the bipolar plates. In order to operate at these high and different working temperatures, the concept includes the raise of the boiling point of water with concomitant increase of the steam pressure in the closed cooling loop. Water-steam equilibrium is maintained along the bipolar plates in the stack and to a certain extend to the rest of the loop, at constant temperature and pressure, targeting to a uniform heat removal and thus uniform temperature distribution lengthwise and between the bipolar plates of the stack. The two-phase equilibrium temperature equals the operating temperature of the bipolar plates and therefore of the stack. In this respect, liquid water is fed at the entrance (19) of the cooling pathways of the stack at the equilibrium temperature and pressure and it is transformed into dry steam, while flowing to the exit (20) of the cooling channels as shown in Figure 1 and 4.

The cooling pathways are formed by the wick micro-channels and void space above the wick where the gas steam is separated from liquid water that is accommodated in the microchannels. The motion of the liquid water along the microchannels is secured by the continuous effect of the capillary forces, which are maintained due to the shape of the meniscus reaching the dry-out point (18), as shown in Figure 6, due to the complete depletion of the cooling liquid through evaporation. This creates the capillary pressure difference which is the driving force for the capillary flow in the micro-channels and concomitantly to any point in the closed steam water loop. Thus, the novelty of the proposed cooling loop is that the gravimetric driving force, as described previously in the literature, is not needed for the circulation of steam and liquid in the closed loop (Neofytidis et al; Energy Conversion and Management. 283 (2023) 116944. https://doi.org/10.1016/j.enconman.2023.116944).

The dry steam flows through the tubing to enter the heat exchanger, where it is condensed into liquid water. The temperature of the condensed liquid water can be the same as the temperature of the HT-PEM fuel cell stack and the temperature of the steam entering the heat exchanger or even lower down to 50°C. The placement of a check valve directly at the water inlet of the stack secures that the steam will expand towards one direction, namely toward the inlet of the heat exchanger/condenser, so that the tubing from the exit of the heat exchanger to the fuel cell contains only liquid water. Only liquid water and water vapor exist in the loop. The thermal management and ultimate heat removal of the HT-PEM fuel cell stack is achieved by simply controlling the flow rate of the secondary coolant, which in the present case is also water transformed into superheated steam either at ambient pressure or at higher pressure ranging between ambient pressure and equilibrium saturation pressure corresponding to the operating temperature of the stack. Thus, for a HT-PEM fuel cell stack operating at 180°C the steam can be pressurized in dry form up to the pressure of 10bar while for operating temperature up to 200°C the corresponding pressure of the superheated steam can be as high as 15.5 bar.

The pressurized superheated dry steam can be used for additional electricity production by use of a steam turbine increasing the overall electrical efficiency of the fuel cell/steam turbine system to 70%-80% depending on the size of the fuel cell and the steam turbine.

The invention will now be further described in the form of embodiments with reference to the accompanying drawings. The same reference signs indicate the same or similar features in different figures and embodiment of the invention, although this is only for reference and is not limiting on the invention. In the following detailed description numerous specific details are set forth by way of examples, in order to provide a thorough understanding of the relevant teachings. However, it will be apparent to one of ordinary skill in the art that the present teachings may be practiced without these specific details.

In one aspect the present invention relates to a bipolar plate assembly comprising
- a first bipolar plate (A) having flow fields (3) and (4) carved on each side of said plate
- a second bipolar plate (B) having flow fields (3) and (4) carved on each side of said plate so that a flow path is configured in both sides of each of said first and said second plate,

wherein said flow fields have a serpentine configuration on one side (A1, B1) of each said plate and an interdigitate configuration on the other side (A2, B2) of each said plate,
wherein each said plate has an entry and/or outlet channel (1) at a gas manifold (1a),
characterized in that the channels (5) of one side are carved over or under the ribs (7) of the other side,
in that said plates are stacked one on top of the other so that said channels (5) on one side of each plate are stacked to face the ribs (7) of the other plate,
in that each said plate has an entry and/or outlet channel (1) which consists of channels (1c), (1b) and (1e) at a gas manifold (1a),
in that said entry and/or outlet gas channel (1) of said first plate has a different position on said manifold (1a) with regard to the position of said entry and/or outlet gas channel (1) of said second plate so that when said first plate and said second plate are placed alternately one on top of the other in order to form a stack of plates, said channels of each plate do no overlap,
and in that a gasket (2) is placed between each said plate without overlapping the inlet/outlet channels (1c) and (1b).

In one embodiment, said bipolar plates are made of aluminum or aluminum alloys and the thickness of each plate is about 1 to 0.5 mm.

In one embodiment, said channels of each plate (A, B) have a width of about 0.2 to 0.5 mm, a depth of about 0.3 to 0.6 mm and wherein the thickness of a wall (6) between two channels or a channel and a rib is about 100 µm to 500 µm.

In one embodiment each of said bipolar plates comprise cooling channels (9) carved on said plates forming a wick (8) where a cooling liquid, preferably water, is accommodated, wherein said cooling liquid develops a meniscus profile (13), a dry out region (14) and capillary forces allowing for driving the flow of said cooling liquid and wherein above said wick a void space is formed where a gas steam created by the evaporation of said cooling liquid can be separated by said liquid.

In one embodiment, said cooling channels of said bipolar plates have a width of about 0.2 to 0.5 mm, a depth of about 0.3 to 0.8 mm a length of up to 200 mm.

In another aspect, the present invention relates to a fuel cell comprising a bipolar plate assembly of the invention.

In one embodiment said fuel cell is a high temperature polymer electrolyte membrane fuel cell.

In another aspect the invention relates to a membrane electrolyte assembly comprising a polymer electrolyte membrane and a bipolar plate assembly of the invention.

In another aspect, the invention relates to a fuel cell comprising a membrane electrolyte assembly stack.

In one embodiment said fuel cell is a high temperature polymer electrolyte membrane cell.

In one aspect, the invention relates to a use of a bipolar plate assembly for the construction of a fuel cell.

In one embodiment the invention relates to a use of a bipolar plate assembly for the construction of a high temperature polymer electrolyte membrane fuel cell.

### Definitions

Unless otherwise defined, scientific and technical terms used herein have the meanings that are commonly understood by those of ordinary skill in the art. In the event of any latent ambiguity, definitions provided herein take precedent over any dictionary or extrinsic definition.

All publications, patents, and accession numbers mentioned herein are hereby incorporated by reference in their entirety as if each individual publication or patent was specifically and individually indicated to be incorporated by reference.

The use of any and all examples, or exemplary language (e g., "such as") provided herein, is intended merely to better illustrate the disclosure and does not pose a limitation on the scope unless otherwise claimed.

As used herein, the articles "a" and "an" can mean "one", but their use is also consistent with the meaning of "one or more", "at least one" and "one or more than one".

The term "or" is used herein to mean, and is used interchangeably with, the term "and/or", unless context clearly indicates otherwise and is to be interpreted as an inclusive "or" meaning any one or any combination.

Throughout this specification and the claims which follow, and unless the context requires otherwise, the terms "comprising", "having" and "including" can be used interchangeably. The terms "comprising" and "including" are to be interpreted as specifying the presence of the stated features or components as referred to, but does not preclude the presence or addition of one or more features, or components, or groups thereof. Additionally, the terms "comprising" and "including" are intended to include examples encompassed by the term "consisting of". Consequently, the term "consisting of" can be used in place of the terms "comprising" and "including" to provide for more specific embodiments of the invention.

The term "fuel cell" in the context of the present disclosure refers to an electrochemical device that converts the chemical energy of a fuel (often hydrogen) and an oxidizing agent (often oxygen) into electricity through a pair of redox reactions. Fuel cells are different from most batteries in requiring a continuous source of fuel and oxygen (usually from air) to sustain the chemical reaction, whereas in a battery the chemical energy usually comes from substances that are already present in the battery. Fuel cells can produce electricity continuously for as long as fuel and oxygen are supplied.

The term "bipolar plates assembly" in the context of the instant invention refers to a set of bipolar plates or separators suitable for use in a fuel cell system.

The terms "liquid" and "fluid" in the context of the present invention may be used interchangeably. The term "about" or "approximately" means the mentioned value +/-10%, for example about 10 shall mean 9 to 11.

Unless otherwise required by context, singular terms shall include pluralities and plural terms shall include the singular.

While the present invention has been described with reference to the specific embodiments thereof, it should be understood by those skilled in the art that various changes may be made and equivalents may be substituted without departing from the true spirit and scope of the invention using this disclosure as a guide.

## Claims

1. A bipolar plate assembly comprising
- a first bipolar plate (A) having flow fields (3) and (4) carved on each side of said plate
- a second bipolar plate (B) having flow fields (3) and (4) carved on each side of said plate
so that a flow path is configured in both sides of each of said first and said second plate,
wherein said flow fields have a serpentine configuration on one side (A1, B1) of each said plate and an interdigitate configuration on the other side (A2, B2) of each said plate,
wherein each said plate has an entry and/or outlet channel (1) at a gas manifold (1a), **characterized in that** the channels (5) of one side are carved over or under the ribs (7) of the other side,
**in that** said plates are stacked one on top of the other so that said channels (5) on one side of each plate are stacked to face the ribs (7) of the other plate,
**in that** each said plate has an entry and/or outlet channel (1) which consists of channels (1c), (1b) and (1e) at a gas manifold (1a),
**in that** said entry and/or outlet gas channel (1) of said first plate has a different position on said manifold (1a) with regard to the position of said entry and/or outlet gas channel (1) of said second plate so that when said first plate and said second plate are placed alternately one on top of the other in order to form a stack of plates said channels of each plate do no overlap,
and **in that** a gasket (2) is placed between each said plate without overlapping the inlet/outlet channels (1c) and (1b).

2. The bipolar plate assembly of claim 1, wherein said bipolar plates are made of aluminum or aluminum alloys and the thickness of each plate is about 1 to 0.5 mm.

3. The bipolar plate assembly of claim 1 or 2 wherein said channels of each plate (A, B) have a width of about 0.2 to 0.5 mm, a depth of about 0.3 to 0.6 mm and wherein the thickness of a wall (6) between two channels or a channel and a rib is about 100 µm to 500 µm.

4. The bipolar plate assembly of anyone of claims 1 to 4, wherein each of said bipolar plates comprises cooling channels (9) carved on said plates forming a wick (8) where a cooling liquid, preferably water, is accommodated, wherein said cooling liquid develops a meniscus profile (13), a dry out region (14) and capillary forces allowing for driving the flow of said cooling liquid and wherein above said wick a void space is formed where a gas steam created by the evaporation of said cooling liquid can be separated by said liquid.

5. The bipolar plate assembly of claim 4 wherein said cooling channels of said bipolar plates have a width of about 0.2 to 0.5 mm, a depth of about 0.3 to 0.8 mm a length of up to 200 mm.

6. A fuel cell comprising a bipolar plate assembly of any one of claims 1 to 5, preferably said fuel cell is a high temperature polymer electrolyte membrane fuel cell.

7. Use of a bipolar plate assembly of any one of claims 1 to 5 for the construction of a fuel cell, preferably a high temperature polymer electrolyte membrane fuel cell.
